# EUROPEAN PATENT SPECIFICATION

(11) **EP 0 349 500 B1**
(45) Date of publication and mention of the grant of the patent: **22.03.1995**
(21) Application number: 89830297.1
(22) Date of filing: 27.06.1989
(51) Int. Cl.: F16P 3/12, B65G 37/02

(54) **Equipment adapted to perform a coordinated transfer of packaged signature bundles from packaging assemblies to downstream machines**
Anlage zum koordinierten Versetzen abgepackter Druckbogen-Stösse von Abpackeinrichtungen zu nachgeschalteten Maschinen
Equipement pour un transfert coordonné de paquets de feuilles à imprimer à partir de dispositifs d'empaquetage aux machines placées en aval

(30) Priority: 27.06.1988 IT 2111688
(43) Date of publication of application: 03.01.1990
(73) Proprietor: O.M.G. di GIORGIO PESSINA E ALDO PEROBELLI S.n.c., Paderno Dugnano (Milano) (IT)
(72) Inventor: Perobelli, Aldo, Cusano Milanino (Milano) (IT); Pessina, Giorgio, Cusano Milanino (Milano) (IT)
(74) Representative: Mercurio, Franco

(56) References cited:
- EP-A- 0 217 757
- BE-A- 906 044
- DE-A- 2 834 975
- DE-A- 3 208 901

## Description

The subject of this invention is an equipment adapted to perform a coordinated transfer of bundles of packaged signatures from packaging facilities to downstream machines.

As it is already known, special integrated cycle equipment is presently available, adapted to perform transfer of individual generally pallet-supported bundles of signatures, and a station for further signature processing, in particular for packaging, or stacking thereof.

For a better understanding of said equipment and operation thereof, reference should be made to our EUROPEAN PATENT N° 0 217'757.

On the other hand, it is known as well that, downstream from said equipment an operating discontinuity takes place, due to an impossibility to directly feed downstream machines for further processing of the stacked signatures.

Said impossibility may substantially be attributed to the fact that, downstream from the platforms (of the above equipment) where the stacked signatures are piled up, no free space or lane is provided, which is accessible and available for allowing operators in charge of checking the apparatus and of possible actions for ensuring correct operation thereof, to freely move therearound.

The main object of this invention was just to create a passage around the machines for their inspection and maintenance.

It is a further object of this invention to overcome the limitations previously complained about by providing an equipment adapted to perform a coordinated transfer of packaged signature bundles from packaging facilities to downstream machines, allowing said downstream machines to be fed at a substantially constant rate.

Within said object, this invention has a further purpose to provide an equipment, adapted to perform coordinated transfer of packaged signature bundles, from packaging facilities to downstream machines, which allows inspection personnel to be present, downstream from said packaging facilities, while maximum safety conditions are guaranteed.

It is a further object of this invention to provide an equipment for coordinately transferring packaged signature bundles from packaging facilities to downstream machines, which is structurally simple and operates very reliably.

The objects and purposes set forth above, as well as others, which might become more apparent in the following, are met in an equipment according to this invention providing a coordinated transfer of packaged signature bundles from packaging facilities to downstream machines, comprising conveyors provided with continuous conveyor belts mounted on stationary or movable supporting structures with the possibility of bodily displacement of at least part of the conveyer belts relative to the structure in the case of stationary supporting structures, said conveyors being installed in a passage provided between said facilities and machines which may be used as a service passage as well; said displacement of at least part of said conveyors or the movement of the associated supporting structures being automatically controlled by interlocking them with suitable sensors adapted to sense the possible presence of operators, within the operating range of said conveyors.

Reference is also made to the German Patent 3208901, which refers to method and device for stopping the movement of a machine to avoid that the latter comes in contact with persons standing in the area of operation of the machine.

Futher features and advantages of the equipment adapted to perform coordinated transfer of packaged signature bundles, making the subject of this invention, will be better understood from the following description of a preferred embodiment of said equipment which is shown, for purely exemplary purposes, in the Figures of the attached drawings, wherein:

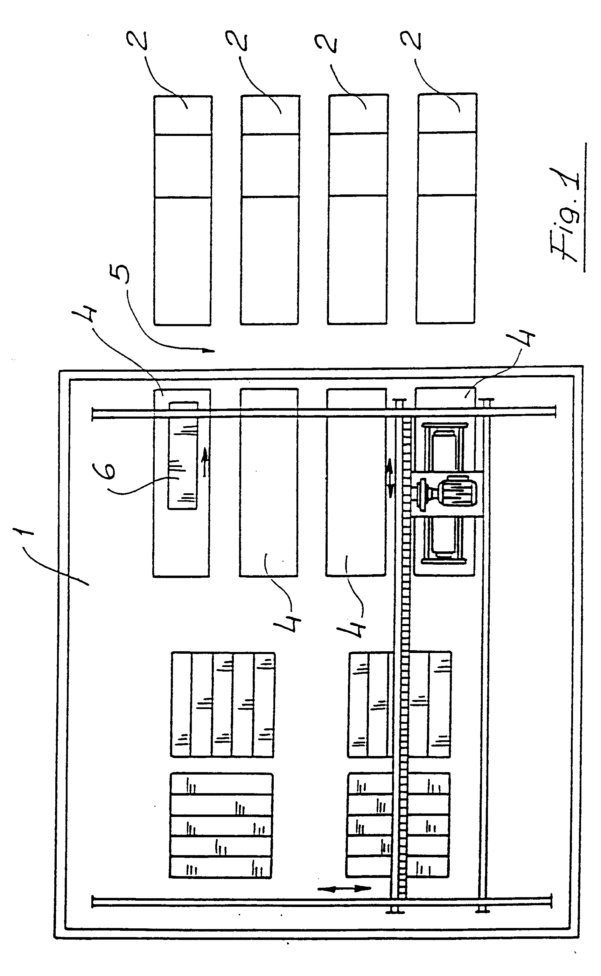

Figure 1 shows schematically an integrated cycle facility having further machines installed downstream therefrom;
Figures 2 to 5 show the same number of endless conveyor belts;
Referring now in particular to the reference numbers of the various Figures of the attached drawing, the subject equipment, for performing a coordinated transfer of packaged signature bundles from integrated cycle packaging facilities (1) to downstream machines, (2), comprises an array of conveyors, shown in general at (3), whose number is the same as platforms (4) of the above facility; an equal number of machines are provided downstream from said platforms.

More particularly, said machines are installed, downstream from said platforms, in such a way as to define, together with the area taken by facilities (1), a service lane or passage (5) along which the operators - in charge of inspection and maintenance - may freely move around, and wherein conveyors (3) are arranged, being provided to transfer individual signature bundles (6) from the platforms to downstream machines.

Said conveyors may be mounted on a stationary structure (7) or else on a carriage (8), suitably driven by its own motor and adapted to move along suitable tracks (9), provided in a transverse direction relative to the above passage.

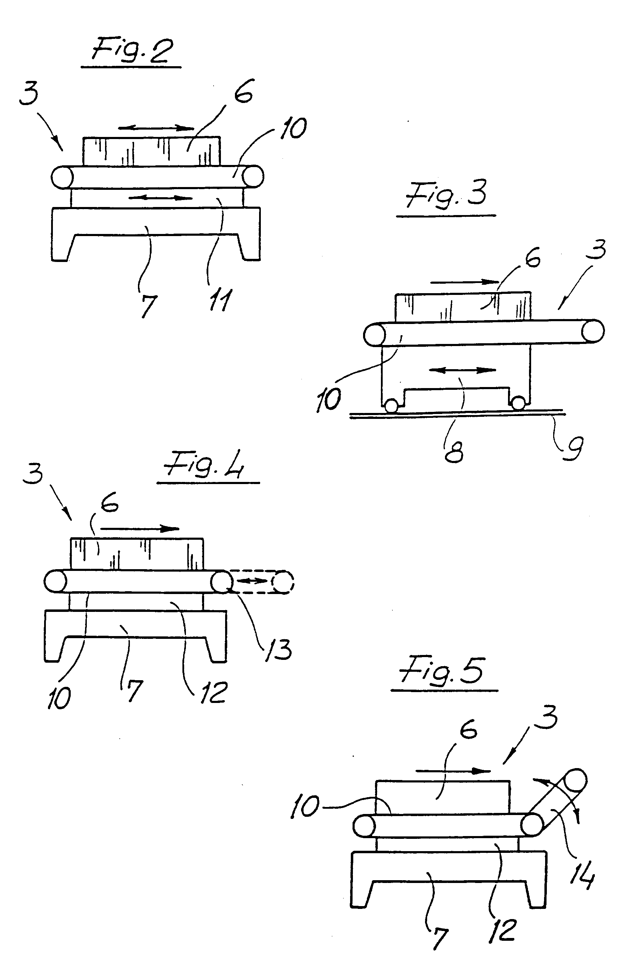

In particular, referring now to Figure 2, endless conveyor belt (10) may be mounted on a baseplate (11) adapted to slide longitudinally relative to the stationary support.

As an alternative (Figures 4 and 5), the endless conveyor belt is mounted on a stationary baseplate (12) and is able to extend all the way to the associated machine, through a reciprocation of one of the supporting pulleys (13), or else through a stretch thereof which is adapted to take a horizontal position as well as, by tilting, a vertical position.

In any case, a large enough room is provided between the conveyors, in their position close to facility (1), and the downstream machines, when the conveyors are at a standstill, to allow the personnel in charge of inspections to walk freely through.

Concerning the above it should be pointed out that the traversing motion of said conveyors is enabled under the automatic control of suitable sensors adapted to spot stationary or moving obstacles.

Said sensors are substantially adapted to stop said conveyor from moving in case they sense an operator being present within the range of action of the conveyor controlled thereby.

In particular, the above sensors may be optical, electromechanical, electromagnetic, capacity type, induction type or pneumatic type, or microswitch type, and they are able to act directly on the power supply of the conveyor driving motor.

Furthermore, the motion of any part of the conveyor (baseplate or carriage or conveyor belt end) which might be involved, may be stopped, in case of a contact with an operator, by means of a suitable friction transmission.

Through the above features, the operators may move substantially unhindered along lane (5), according to the particular actions they have to perform, in maximum safety conditions concerning both personal safety of the operators and proper operation of said conveyors.

From what has been described above and from observation of the Figures of the attached drawings, there appears the high degree of functionality and convenience in practical usage, which characterize the equipment, making the subject of this invention, adapted to perform coordinated transfer of packaged signature bundles from packaging facilities to the downstream machines.

It should be understood that the subject equipment has been described and shown herein for purely exemplary and non limiting purposes, for the only reason of proving the practical feasability and the general features of this invention, whereby to the same there may be made all those variations and modifications which might be apparent to those skilled in this art, and which are within the scope of the above invention as defined by claim 1.

## Claims

1. Equipment providing a coordinated transfer of packaged signature bundles (6) from packaging facilities (1) to downstream machines (2), comprising conveyors (3) provided with continuous conveyor belts (10) mounted on stationary or movable supporting structures (7, 8) with the possibility of bodily displacement of at least part of the conveyor belts (10) relative to the structure in the case of stationary supporting structures (7), said conveyors (3) being installed in a passage (5) provided between said facilities (1) and machines (2) which may be used as a service passage as well; said displacement of at least part of said conveyors (3) or the movement of the associated supporting structures (7, 8) being automatically controlled by interlocking them with suitable sensors adapted to sense the possible presence of operators, within the operating range of said conveyors (3).

2. The equipment of the previsous claim, characterized in that said conveyors (3) are in the same number as the integrated cycle packaging facility platforms (4), and associated with as many machines (2) installed downstream; more particularly, said machines are arranged, downstream from the associated platforms (4), in such a way as to define, together with the area taken by the facility, the service passage (5), wherein operators - in charge of inspection and maintenance - may move freely, and wherein said conveyors are arranged.

## Patentansprüche

1. Anlage zur koordinierten Übertragung von abgepackten Druckbogenstößen (6) aus der Abpackeinrichtung (1) zu nachgeschalteten Maschinen (2) mit mit kontinuierlichen Förderbändern (10) ausgerüsteten kontinuierlichen Fördereinrichtungen, die auf einem stationären oder sich bewegenden Trägeraufbau (7, 8) montiert sind, wobei wenigstens ein Teil der Förderriemen (10) relativ zu dem Aufbau im Falle eines stationären Trägeraufbaus (7) versetzbar ist, und wobei die Fördervorrichtungen (3) in einem Durchlaß (5) zwischen der Anlage (1) und den Maschinen (2) installiert sind, der auch als Servicepfad benutzbar ist, wobei die Versetzung wenigstens des Teils der Fördervorrichtung (3) oder die Bewegung des zugeordneten Trägeraufbaus (7, 8) automatisch dadurch gesteuert wird, daß eine Verriegelung über geeignete Sensoren erfolgt, die so angeordnet sind, daß die mögliche Anwesenheit einer Bedienungsperson im Arbeitsbereich der Fördervorrichtung (3) festgestellt wird.

2. Anlage nach dem vorherigen Anspruch,
dadurch gekennzeichnet, daß die Fördervorrichtungen (3) in gleicher Zahl vorgesehen sind wie die Plattformen (4) der Abpackeinrichtungen mit integriertem Zyklus, und daß die Fördervorrichtungen einer gleichen Anzahl von nachgeschalteten Maschinen (2) zugeordnet sind, und daß die Maschinen derart hinter den zugeordneten Plattformen (4) angeordnet sind, daß zusammen mit diesen der Servicepfad (5) gebildet wird, so daß sich die betreffende Bedienungsperson frei in diesem bewegen kann, in dem die Fördereinrichtungen angeordnet sind.

## Revendications

1. Equipement permettant un transfert coordonné de liasses (6) de feuilles à imprimer empaquetées à partir de dispositifs d'empaquetage (1) vers des machines (2) placées en aval, comprenant des convoyeurs (3) munis de courroies transporteuses continues (10) montées sur des structures de support stationnaires ou mobiles (7, 8), avec la possibilité d'un déplacement physique d'au moins une partie des courroies transporteuses (10) par rapport à la structure dans le cas de structures de support stationnaires (7), lesdits convoyeurs (3) étant installés dans un passage (5) prévu entre lesdits dispositifs (1) et les machines (2) qui peut être utilisé également en tant que passage de service; ledit déplacement d'au moins une partie desdits convoyeurs (3) ou le mouvement des structures de support associées (7, 8) étant commandé automatiquement en les reliant à des capteurs appropriés adaptés à détecter la présence possible d'opérateurs à l'intérieur de la zone de fonctionnement desdits convoyeurs (3).

2. Equipement selon la revendication précédente, caractérisé en ce que lesdits convoyeurs (3) sont en nombre égal à celui des plateformes (4) des dispositifs d'empaquetage à cycle intégré, et sont associés à un nombre égal de machines (2) placées en aval; plus particulièrement lesdites machines sont disposées, en aval des machines associées (4), de manière à définir, avec la surface occupée par le dispositif le passage de service (5) dans lequel des opérateurs - dont la fonction est l'inspection et l'entretien - peuvent se déplacer librement, et dans lequel sont disposés lesdits convoyeurs.
